# EUROPÄISCHE PATENTANMELDUNG

(11) **EP 2 052 655 A2**
(43) Veröffentlichungstag der Anmeldung: **29.04.2009**
(21) Anmeldenummer: 08018613.3
(22) Anmeldetag: 24.10.2008
(51) Int. Cl.: A47J 42/46

(54) **Vorrichtung zum Zerkleinern von Lebensmitteln**

(30) Priorität: 24.10.2007 DE 102007051104; 08.11.2007 DE 102007053639
(71) Anmelder: Kaltenbach, Frank, 68259 Mannheim (DE)
(72) Erfinder: Kaltenbach, Frank, 68259 Mannheim (DE)
(74) Vertreter: Ullrich & Naumann

(57) **Zusammenfassung**

Eine Vorrichtung zum Zerkleinern von Lebensmitteln, Gewürzen oder dgl., mit einem Gehäuse (1), einem in dem Gehäuse (1) ausgebildeten Speicher (2) zur Bereitstellung des zu zerkleinernden Guts und einem auf das Gut wirkenden Zerkleinerungswerk (3), wobei das Zerkleinerungswerk (3) über eine ein Griffstück (5) umfassende Betätigungseinrichtung (4) manuell antreibbar ist, ist **dadurch gekennzeichnet, dass** zwischen der Betätigungseinrichtung (4) und dem Zerkleinerungswerk (3) ein Getriebe (6) vorgesehen ist, welches von der Betätigungseinrichtung (4) auf das Zerkleinerungswerk (3) untersetzt.

## Beschreibung

Die Erfindung betrifft eine Vorrichtung zum Zerkleinern von Lebensmitteln, Gewürzen oder dgl., mit einem Gehäuse, einem in dem Gehäuse ausgebildeten Speicher zur Bereitstellung des zu zerkleinernden Guts und einem auf das Gut wirkenden Zerkleinerungswerk, wobei das Zerkleinerungswerk über eine ein Griffstück umfassende Betätigungseinrichtung manuell antreibbar ist.

Vorrichtungen der gattungsbildenden Art sind in den unterschiedlichsten Ausführungen bekannt. Dazu sei lediglich beispielhaft auf die aus der Praxis bekannten Pfeffer- und Salzmühlen verwiesen. Solche Vorrichtungen gibt es in rein mechanischen oder elektromechanischen Ausführungen.

Die aus der Praxis bekannten manuell betätigbaren Pfeffer- und Salzmühlen sind jedoch insoweit problematisch, als sie nicht zuletzt aufgrund des sehr grobkörnigen Mahlguts äußerst schwergängig sind. Außerdem vollzieht sich das Drehen des Mahlwerks mittels der Betätigungseinrichtung meist ruckhaft, nämlich immer dann, wenn gerade ein oder mehrere Pfefferkörner bzw. ein oder mehrere Salzkörner zerkleinert werden. Im ungünstigen Falle blockiert das Mahlwerk und ist eine Hin- und Herbewegung mittels der Betätigungseinrichtung bzw. des Griffstücks erforderlich. Jedenfalls ist die gattungsbildende Mühle in der Handhabung wenig komfortabel.

Der vorliegenden Erfindung liegt daher die Aufgabe zugrunde, eine Vorrichtung zum Zerkleinern von Lebensmitteln, Gewürzen oder dgl. derart auszugestalten und weiterzubilden, dass sie sich mühelos, d.h. bequem und mit nur geringer Kraftaufwendung, handhaben lässt.

Die voranstehende Aufgabe wird durch die Merkmale des Patentanspruchs 1 gelöst. Danach ist die gattungsbildende Vorrichtung zum Zerkleinern von Lebensmitteln, Gewürzen oder dgl. dadurch gekennzeichnet, dass zwischen der Betätigungseinrichtung und dem Zerkleinerungswerk ein Getriebe vorgesehen ist, welches von der Betätigungseinrichtung auf das Zerkleinerungswerk untersetzt.

Erfindungsgemäß ist erkannt worden, dass es von enormem Vorteil ist, wenn zwischen der Betätigungseinrichtung und dem Zerkleinerungswerk bzw. Mahlwerk ein Getriebe wirkt. Zweckmäßigerweise ist dieses Getriebe unmittelbar unterhalb der Betätigungseinrichtung angeordnet, wobei sich die Betätigungseinrichtung über das Griffstück und eine entsprechende Wirkverbindung in das Getriebe hinein erstreckt. Abtriebseitig ist eine Stange vorgesehen, die sich unmittelbar oder mittelbar von dem Getriebe in das Zerkleinerungswerk hinein erstreckt und dieses antreibt.

Das Getriebe könnte beispielsweise im Verhältnis 4:1 untersetzen. Insbesondere in Bezug auf eine universell verwendbare Vorrichtung ist es von ganz besonderem Vorteil, wenn die Untersetzung des Getriebes vorzugsweise von außerhalb des Gehäuses, beispielsweise über einen gegenüber der Gehäusewandung drehbaren Einstellring, vorzugsweise über einen sogenannten Rändelring, einstellbar ist. Insoweit ließe sich das Untersetzungsverhältnis entsprechend dem Mahlgut definieren, wobei es bei weicherem Mahlgut zugunsten einer geringeren Umdrehung von Vorteil ist, das Untersetzungsverhältnis zu reduzieren. Bei sehr hartem Mahlgut wird man ein hohes Untersetzungsverhältnis wählen, um nämlich bei erhöhter Drehung einen geringeren Kraftaufwand zu haben. Auch sehr hartes Zerkleinerungsgut lässt sich komfortabel zerkleinern.

In ganz besonders vorteilhafter Weise umfasst das Getriebe ein miniaturisiertes Zahnradgetriebe, wobei die Verwendung eines äußerst klein bauenden Planetengetriebes von baulichem vorteil ist. Das Planetengetriebe ist im Gehäuse angeordnet, und zwar vorzugsweise unmittelbar unter dem Griffstück bzw. der Betätigungseinrichtung. So befindet sich das Planetengetriebe vorzugsweise in einem Kopfbereich des Gehäuses.

Die Betätigungseinrichtung kann unterschiedlich gestaltet sein. Vorzugsweise ist sie als Kurbeleinrichtung bzw. Dreheinrichtung oder dgl. ausgeführt. Die Kurbeleinrichtung umfasst ein exzentrisches Griffstück, um nämlich über einen entsprechenden Hebel ein ausreichendes Drehmoment generieren zu können. Gerade aufgrund der Vorkehrung des Getriebes ist es nunmehr möglich, eine Betätigungseinrichtung mit nur geringer Auslage, d.h. mit kurzem Hebel von der Gehäuseachse zum Griffstück, zu realisieren und gleichzeitig ein hinreichend hohes Drehmoment zu schaffen, welches bei Vorkehrung eines Getriebes längst nicht so hoch sein muss wie bei einer herkömmlichen Mühle ohne Getriebe.

Im Konkreten ist es denkbar, dass die Betätigungseinrichtung über das Getriebe auf eine sich vorzugsweise mittig durch den Speicher hindurch in das Zerkleinerungswerk hinein erstreckende Stange wirkt. Die Stange ist als Wirkverbindung zwischen dem Getriebe und dem Zerkleinerungswerk zu verstehen. Außerdem ist es denkbar, dass die Stange im Querschnitt quadratisch bzw. rechtwinklig oder gar im Sinne einer Schnecke ausgeführt ist, um gleichzeitig das Zerkleinerungsgut zu bewegen bzw. zu mischen. Auch dadurch wird der Zerkleinerungsvorgang begünstigt, insbesondere in Bezug auf den Einlauf in das Zerkleinerungswerk.

In Bezug auf die Betätigungseinrichtung ist es von weiterem Vorteil, wenn das Griffstück über eine zumindest teilweise mit der Gehäusewandung abschließende Anschlussplatte exzentrisch zur Längsachse des Gehäuses angeordnet ist. Die Anschlussplatte ist drehfest mit einem in das Getriebe führenden Bolzen oder dgl. verbunden. Ebenso ist die Anschlussplatte mit dem Griffstück verbunden, welches auf der Anschlussplatte ortsfest aber drehbar angeordnet ist. Somit wirkt die Anschlussplatte als Exzenter, wobei das Griffstück mit seiner Drehachse in Bezug auf das Gehäuse außermittig angeordnet ist.

Das Griffstück kann im Randbereich der Querschnittsfläche des Gehäuses angeordnet sein. Eine solche Anordnung bietet sich an, wenn das Griffstück in etwa dem Querschnitt des Gehäuses entspricht. Auch ist es denkbar, dass die Anschlussplatte komplett neben der Querschnittsfläche des Gehäuses angeordnet ist, nämlich insbesondere dann, wenn das Griffstück im Querschnitt kleiner als das Gehäuse ist. So könnte das Griffstück exakt am Rand des Gehäuses beginnen und sich von dort aus auf der Anschlussplatte weiter nach außen erstrecken.

Insbesondere in Bezug auf ein einheitliches, ja sogar monolithisches Design ist es von Vorteil, wenn das Griffstück als oberer Gehäusefortsatz ausgebildet ist und aus einer zum Gehäuse koaxialen Ruheposition in eine außermittige Arbeitsposition bewegbar ist. Die Bewegung des Griffstücks aus der Ruheposition in die Arbeitsposition könnte durch Drehen oder Verschieben erfolgen. Im Konkreten ist es denkbar, dass das Griffstück über eine Führungseinrichtung, vorzugsweise über eine Gleitführung, gegenüber dem Gehäuse verschiebbar ist. Eine miniaturisierte Kreuzrollenführung oder dgl. wäre ebenso realisierbar, um nämlich das Griffstück gegenüber dem Gehäuse, auf einer Art Anschlussplatte, zu verschieben. Ein endseitiges Verrasten des Griffstücks bzw. Arretieren ist mit unterschiedlichsten Mitteln möglich.

Das Gehäuse kann unterschiedliche Geometrien aufweisen. Beispielsweise könnte das Gehäuse in etwa zylindrisch aufgeführt sein. Das Griffstück kann grundsätzlich als eine Art Gehäusefortsatz mit in etwa gleichem oder kleinerem Durchmesser wie das Gehäuse ausgeführt sein, so dass das Gehäuse gemeinsam mit dem Griffstück eine bauliche und optische Einheit bildet.

Der zum Drehen des Zerkleinerungswerkes erforderliche Kraftaufwand lässt sich abermals reduzieren, nämlich dadurch, dass drehbare Teile, insbesondere das Griffstück und/oder die Anschlussplatte, kugelgelagert sind. Grundsätzlich ist es denkbar, dass alle drehbaren Teile der Vorrichtung reibungsarm gelagert sind, vorzugsweise kugelgelagert, so dass eine bequeme Handhabung der Vorrichtung auch bei sehr hartem Mahlgut gewährleistet ist.

In weiter vorteilhafter Weise ist im Bereich des Zerkleinerungswerks, vorzugsweise am auswurfseitigen Ende des Gehäuses, ein Einstellring oder dgl. vorgesehen, vorzugsweise in Form eines Rändelrings. Der Einstellring dient zur Feineinstellung des Zerkleinerungswerks, wobei über die Position des Rändelrings optisch anzeigbar ist, wie weit das Zerkleinerungswerk geöffnet ist.

Im Konkreten kann es sich bei dem Zerkleinerungswerk um ein Mahlwerk handeln, vorzugsweise zum Mahlen von Pfeffer und Salz. Auch ist es denkbar dass es sich bei dem Zerkleinerungswerk um einen Hobel, einen Schaber oder dgl. handelt, vorzugsweise zum Zerkleinern bzw. Hobeln von weichen Lebensmitteln, beispielsweise von Käse. Eine optimale Anpassung auf unterschiedlichste Lebensmittel, Gewürze oder dgl. ist denkbar.

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Patentansprüche und andererseits auf die nachfolgende Erläuterung zweier bevorzugter Ausführungsbeispiele der Erfindung anhand der Zeichnung zu verweisen. In Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erläutert. In der Zeichnung zeigen
- Fig. 1: in einer schematischen Ansicht ein Ausführungsbeispiel einer erfindungsgemäßen Vorrichtung, wobei dass Griffstück gegenüber dem Gehäuse bzw. gegenüber einer Anschlussplatte verschiebbar in eine exzentrische Arbeitsposition verschiebbar ist und
- Fig. 2: ein weiteres Ausführungsbeispiel einer erfindungsgemäßen Vorrichtung, wobei dort das Griffstück über eine Anschlussplatte exzentrisch zum Gehäuse angeordnet ist.

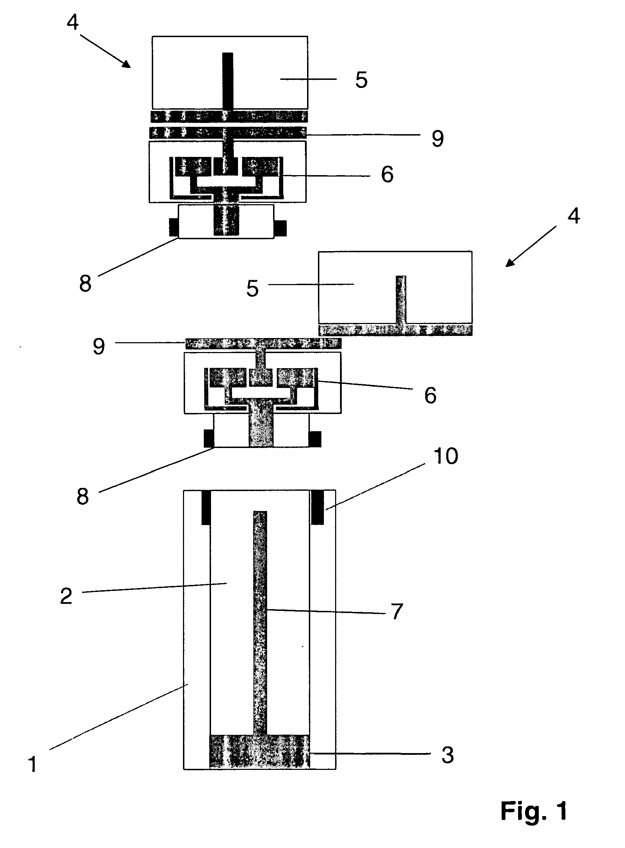

Fig. 1 zeigt in einer schematischen Ansicht den prinzipiellen Aufbau eines Ausführungsbeispiels einer erfindungsgemäßen Pfeffer-/Salzmühle. Die Vorrichtung umfasst ein Gehäuse 1 und einen in dem Gehäuse 1 ausgebildeten Speicher 2 zum Bereitstellen des in der Fig. nicht gezeigten Mahlguts.

Der Speicher 2 ist oberhalb eines Zerkleinerungswerks bzw. Mahlwerks 3 angeordnet, so dass das zu mahlende Gut über Schwerkraft auf das Mahlwerk 3 wirkt. Das Mahlwerk 3 ist manuell antreibbar, nämlich über eine Betätigungseinrichtung 4, die ein Griffstück 5 umfasst.

In erfindungsgemäßer Weise ist zwischen der Betätigungseinrichtung 4 und dem Mahlwerk 3 ein Getriebe 6 vorgesehen, wobei es sich dabei im Konkreten um ein Planetengetriebe handelt. Das Planetengetriebe könnte im Verhältnis 4:1 untersetzen. Beliebige andere Untersetzungen sind entsprechend dem Mahlgut reailisierbar.

Die Betätigungseinrichtung 4 ist im Sinne einer Kurbeleinrichtung ausgebildet, wobei es erforderlich ist, dass das Griffstück 5 zum Betätigen exzentrisch, d.h. in Bezug auf die Gehäuseachse außermittig, angeordnet ist.

Fig. 1 zeigt des Weiteren, dass die Betätigungseinrichtung 4 bzw. das Griffstück 5 auf das Getriebe 6 wirkt. Das Getriebe 6 wirkt abtriebsseitig über eine Stange 7 auf das Mahlwerk 3. Die Stange 7 ist kantig ausgeführt und dient gleichzeitig zum Bewegen bzw. Mischen des Mahlguts.

Die Darstellung in Fig. 1 zeigt im oberen Drittel den Kopf des Gehäuses, nämlich umfassend die Betätigungseinrichtung 4 bzw. das Griffstück 5, das Getriebe 6 und einen oberen Anschlussbereich 8. Der Figurenteil im oberen Drittel von Fig. 1 zeigt das Griffstück 5 in der Ruheposition, wonach es als Fortsatz des Gehäuses 1 zu verstehen ist. Im mittleren Drittel von Fig. 1 ist das Griffstück 5 in eine exzentrische Arbeitsposition auf einer Anschlussplatte 9 heraus geschoben, so dass über den so entstehenden Hebel ein Drehmoment gegenüber der Anschlussplatte 9 bzw. dem Getriebe 6 erzeugbar ist. Das Griffstück 5 ist auf der Anschlussplatte 9 ortsfest aber drehbar angeordnet. Die Anschlussplatte 9 dreht gegenüber dem Gehäuse 1.

Im unteren Drittel von Fig. 1 ist der sonstige Gehäuseteil dargestellt, der einerseits den Speicher 2 und andererseits die Stange 7 bis hin zu dem Mahlwerk 3 umfasst. Außerdem ist dort ein weiterer Anschlussbereich 10 vorgesehen, der mit dem oberen Anschlussbereich 8 zusammenwirkt. Beide Anschlussbereiche 8, 10 können im Sinne einer Bajonettverbindung zusammenwirken. Beliebige Steck-, Schraub-, Dreh-, Rast-, etc. Verbindungen sind realisierbar.

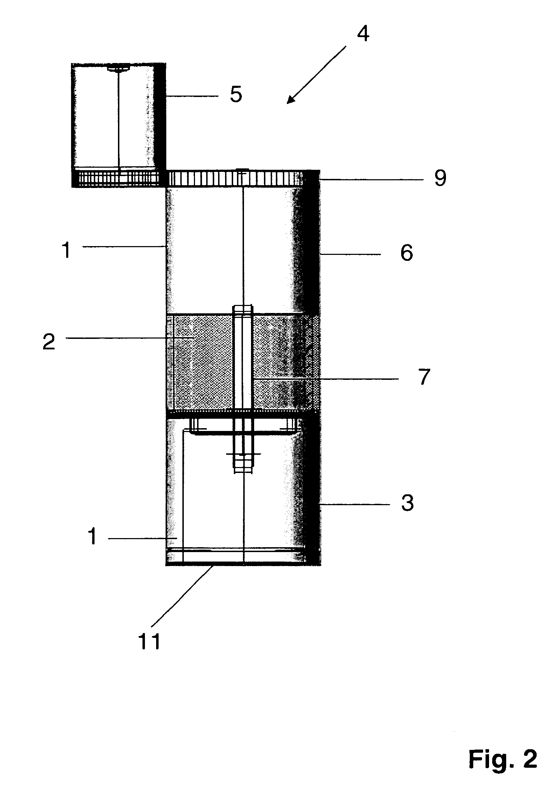

Die in Fig. 2 gezeigte Ausführung einer erfindungsgemäßen Vorrichtung unterscheidet sich von dem in Fig. 1 gezeigten Ausführungsbeispiel dadurch, dass gemäß Fig. 2 das Griffstück 5 ortsfest auf der Anschlussplatte 9 angeordnet ist, die zur Bildung eines Hebelarms und somit zur Schaffung des erforderlichen Drehmoments einen seitlichen Fortsatz entsprechend dem Querschnitt des Griffstücks 5 aufweist. Das Griffstück 5 ist drehbar auf der Anschlussplatte 9 angeordnet. Des Weiteren ist in Fig. 2 angedeutet, dass im unteren Bereich des Gehäuses 1 eine Art Rändelring 11 vorgesehen ist, der zum Einstellen des Mahlwerks, insbesondere der Öffnung in das Mahlwerk, dienen kann. Insoweit lässt sich eine individuelle Anpassung auf das konkrete Mahlgut vornehmen.

Schließlich sei angemerkt, dass das voranstehend erörterte Ausführungsbeispiel lediglich der beispielhaften Erörterung der beanspruchten Lehre dient, diese jedoch nicht auf das Ausführungsbeispiel einschränkt.

### Bezugszeichenliste

- 1: Gehäuse
- 2: Speicher
- 3: Zerkleinerungswerk, Mahlwerk
- 4: Betätigungseinrichtung
- 5: Griffstück der Betätigungseinrichtung
- 6: Getriebe, Planetengetriebe
- 7: Stange
- 8: oberer Anschlussbereich (des Gehäusekopfes)
- 9: Anschlussplatte
- 10: Anschlussbereich (des unteren Gehäuseteils)
- 11: Rändelring (zum Einstellen des Zerkleinerungswerks)

## Patentansprüche

1. Vorrichtung zum Zerkleinern von Lebensmitteln, Gewürzen oder dgl., mit einem Gehäuse (1), einem in dem Gehäuse (1) ausgebildeten Speicher (2) zur Bereitstellung des zu zerkleinernden Guts und einem auf das Gut wirkenden Zerkleinerungswerk (3), wobei das Zerkleinerungswerk (3) über eine ein Griffstück (5) umfassende Betätigungseinrichtung (4) manuell antreibbar ist,
**dadurch gekennzeichnet, dass** zwischen der Betätigungseinrichtung (4) und dem Zerkleinerungswerk (3) ein Getriebe (6) vorgesehen ist, welches von der Betätigungseinrichtung (4) auf das Zerkleinerungswerk (3) untersetzt.

2. Vorrichtung nach Anspruch 1, **dadurch gekennzeichnet, dass** das Getriebe (6) in etwa 4:1 untersetzt.

3. Vorrichtung nach Anspruch 1 oder 2, **dadurch gekennzeichnet, dass** die Untersetzung des Getriebes (6) von außerhalb des Gehäuses (1), vorzugsweise über einen gegenüber der Gehäusewandung drehbaren Einstellring, insbesondere über einen Rändelring, einstellbar ist.

4. Vorrichtung nach einem der Ansprüche 1 bis 3, **dadurch gekennzeichnet, dass** das Getriebe (6) als Zahnradgetriebe, insbesondere als Planetengetriebe, ausgeführt ist.

5. Vorrichtung nach einem der Ansprüche 1 bis 4, **dadurch gekennzeichnet, dass** die Betätigungseinrichtung (4) als Kurbeleinrichtung, Dreheinrichtung oder dgl. ausgeführt ist.

6. Vorrichtung nach einem der Ansprüche 1 bis 5, **dadurch gekennzeichnet, dass** die Betätigungseinrichtung (4) über das Getriebe (6) auf eine sich vorzugsweise mittig durch den Speicher (2) hindurch in das Zerkleinerungswerk (3) hinein erstreckende Stange (7) wirkt.

7. Vorrichtung nach einem der Ansprüche 1 bis 6, **dadurch gekennzeichnet, dass** das Griffstück (5) über eine zumindest teilweise mit der Gehäusewandung abschließende Anschlussplatte (9) exzentrisch zur Längsachse des Gehäuses (1) angeordnet ist,
wobei das Griffstück (5) über die Anschlussplatte (9) komplett neben der Querschnittsfläche des Gehäuses (1) angeordnet sein kann.

8. Vorrichtung nach einem der Ansprüche 1 bis 7, **dadurch gekennzeichnet, dass** das Griffstück (5) in etwa der Form des Gehäuses (1) angepasst ist.

9. Vorrichtung nach einem der Ansprüche 1 bis 8, **dadurch gekennzeichnet, dass** das Griffstück (5) als oberer Gehäusefortsatz ausgebildet ist und aus einer zum Gehäuse (1) koaxialen Ruheposition in eine außermittige Arbeitsposition bewegbar ist,
wobei das Griffstück (5) aus der Ruheposition in die Arbeitsposition drehbar oder verschiebbar sein kann und
wobei das Griffstück (5) über eine Führungseinrichtung, vorzugsweise über eine Gleitführung, gegenüber dem Gehäuse (1) verschiebbar sein kann.

10. Vorrichtung nach einem der Ansprüche 1 bis 9, **dadurch gekennzeichnet, dass** das Gehäuse (1) in etwa zylindrisch ausgeführt ist und dass das Griffstück (5) als Gehäusefortsatz mit in etwa gleichem oder kleinerem Durchmesser wie das Gehäuse (1) ausgeführt ist.

11. Vorrichtung nach einem der Ansprüche 1 bis 10, **dadurch gekennzeichnet, dass** drehbare Teile, insbesondere das Griffstück (5) und/oder die Anschlussplatte (9), kugelgelagert sind.

12. Vorrichtung nach einem der Ansprüche 1 bis 11, **dadurch gekennzeichnet, dass** alle drehbaren Teile reibungsarm gelagert, zumindest teilweise kugelgelagert sind.

13. Vorrichtung nach einem der Ansprüche 1 bis 12, **dadurch gekennzeichnet, dass** im Bereich des Zerkleinerungswerkes (3), vorzugsweise am auswurfseitigen Ende des Gehäuses (1), ein Einstellring, vorzugsweise in Form eines Rändelrings (11), vorgesehen ist, der zur Feineinstellung des Zerkleinerungswerks (3) dient.

14. Vorrichtung nach einem der Ansprüche 1 bis 13, **dadurch gekennzeichnet, dass** es sich bei dem Zerkleinerungswerk (3) um ein Mahlwerk handelt, vorzugsweise zum Mahlen von Pfeffer oder Salz.

15. Vorrichtung nach einem der Ansprüche 1 bis 13, **dadurch gekennzeichnet, dass** es sich bei dem Zerkleinerungswerk (3) um einen Hobel, Schaber oder dgl. handelt, vorzugsweise zum Zerkleinern bzw. Hobeln von Käse.
